# EUROPÄISCHE PATENTANMELDUNG

(11) **EP 1 083 651 A2**
(43) Veröffentlichungstag der Anmeldung: **14.03.2001**
(21) Anmeldenummer: 00119515.5
(22) Anmeldetag: 07.09.2000
(51) Int. Cl.: H02P 7/29

(54) **Verfahren und Vorrichtung zur Impulsbreitenbegrenzung zur Regelschwingungsunterdrückung**

(30) Priorität: 09.09.1999 DE 19943210
(71) Anmelder: Sirona Dental Systems GmbH, 64625 Bensheim (DE)
(72) Erfinder: Ackermann, Werner, 64367 Mühltal (DE); Redemund, Sven, 64625 Bensheim (DE)
(74) Vertreter: Sommer, Peter

(57) **Zusammenfassung**

Die Erfindung bezieht sich auf ein Verfahren zur Impulsbreitenbegrenzung zur Unterdrückung von Regelschwingungen, bei der Drehzahlregelung eines Elektrokleinstmotors (7), der nach dem Regelprinzip der RI-Kompensation in seiner Drehzahl regelbar ist. Beim Nachregeln der Leistung des Elektrokleinstmotors (7) durch den RI-Regelbaustein (10) wird die minimal mögliche Impulsbreite abhängig von der Leistungsnachregelung am Elektrokleinstmotor (7) variiert.

## Beschreibung

Die Erfindung bezieht sich auf ein Verfahren und einer Vorrichtung zur Impulsbreitenbegrenzung zur Regelschwingungsunterdrückung an einem Elektrokleinstmotor für dentale Zwecke.

DE 44 12 413 C1 bezieht sich auf eine Einrichtung zur Optimierung des Drehzahlregelverhaltens eines Elektrokleinstmotors für zahnärztliche Zwecke. Mit dieser soll es ermöglicht werden, den Elektrokleinstmotor so zu betreiben, daß er in jedem gewünschten Drehzahlbereich optimal regelbar ist. Die Einrichtung enthält hierzu ein erstes Modul zur Regelung der Drehzahl durch EMK-Messung, ferner ein zweites Modul zur Regelung der Drehzahl durch RI-Kompensation und Mittel, welche in Abhängigkeit von vorgebbaren Drehzahldaten entscheiden, welches der beiden genannten Module mit welchen Anteilen die Drehzahlregelung des Elektrokleinstmotors übernimmt. Bei der RI-Regelung der Drehzahl eines Elektrokleinstmotors erfolgt dessen Regelung über die RI-Kompensation des inneren Spannungsabfalls am Motor. Der Motorstrom wird dabei in Abhängigkeit von der Motorlast gemessen. Bei Drehzahlrückgang infolge stärkerer Belastung wird ein höherer Motorstrom gemessen; umgekehrt steigt bei Belastungsrückgang die Drehzahl, wodurch ein kleinerer Motorstrom gemessen wird. Die gemessene Motorstromdifferenz wird einer Regeleinrichtung zugeführt, die dann die Drehzahl auf den gewünschten Sollwert bringt. Der Vorteil dieser Motorregelung liegt in einem sehr ruhigen Laufverhalten des Motors bis in den oberen Drehzahlbereich. Nachteilig ist jedoch, daß im unteren besonders aber im untersten Drehzahlbereich der Motor ein relativ kleines Drehmoment abgibt. Die Stromerhöhungen für eine Kompensationsmessung sind hier zu gering, dagegen machen sich die Kollektorverluste relativ stark bemerkbar.

Bei RI-Regelungen kann die Impulsbreite der Ansteuerimpulse von 0 bis zur maximal möglichen Impulslänge (= Dauerimpuls) schwanken. Entstehen durch die Trägheit des Motors Regelschwingungen, wird die Impulsschwankungsbreite komplett ausgeschöpft. Dies bedeutet, daß die dem Elektrokleinstmotor zugeführte Leistung kurzfristig zwischen 0 und dem Maximalwert schwanken kann. Bei einer Unterdrückung der auftretenden Regelschwingungen durch Dämpfung wird die Regelung zu langsam. Die Verzögerung wie auch eine mögliche Überkompensation der Regelschwingungen machen sich für den Anwender dadurch negativ bemerkbar, daß beispielsweise bei zu lange andauernden Regelpausen aufgrund der Dämpfung der Regelschwingungen beim Anwender der Eindruck entstehen kann, daß etwas mit dem Elektrokleinstmotor nicht in Ordnung sei.

Angesichts des aufgezeigten technischen Problems liegt der Erfindung die Aufgabe zugrunde, die Schwankungsbreite der Regelschwingungen zu beeinflussen.

Erfindungsgemäß wird diese Aufgabe dadurch gelöst, daß bei einem Verfahren zur Impulsbreitenbegrenzung zur Unterdrückung von Regelschwingungen bei einer Drehzahlregelung eines Elektrokleinstmotors nach dem Regelungsprinzip der RI-Kompensation beim Nachregeln der Leistung des Elektrokleinstmotors durch den RI-Regelbaustein, die minimal mögliche Impulsbreite abhängig von der Leistungsnachregelung des Elektrokleinstmotors variiert wird.

Mittels einer solcherart erzielbaren Eingrenzung des Regelbereiches durch Eingrenzung der Impulsschwankungsbreite lassen sich bei Drehzahlregelungen nach dem RI-Prinzip auftretende Überkompensationen sowie die Ausprägung von Regelschwingungen vermeiden. Der Elektrokleinstmotor kann dadurch bis in niedrige Drehzahlbereiche in seiner Drehzahl stabil gehalten werden. Im Idealfalle treten am Elektrokleinstmotor keine Drehzahländerungen auf.

In weiterer Ausgestaltung des der Erfindung zugrundeliegenden Verfahrens zur Impulsbreitenbegrenzung lässt sich durch die Erhöhung der minimalen Impulsbreite auf eine untere Impulslänge die Motorleistung auf eine Leistung einregeln, die unterhalb der momentan benötigten Motorleistung des Elektrokleinstmotors liegt. Damit sind lange Regelpausen bei der Nachregelung der Leistung am Elektrokleinstmotor ausgeschlossen, da die Leistung immer in der Nähe, das heißt etwas unterhalb der benötigten Momentanleistung des Elektrokleinstmotors liegt.

Die obere Begrenzung des Impulses ist durch den Dauerimpuls gegeben, an welche sich die Impulslänge bei ansteigender Durchschnittsleistung am Elektrokleinstmotor annähert. Mit dieser sich auf den Dauerimpuls zubewegenden Impulslänge, kann die Impulsschwankungsbreite nach oben hin variiert werden. Bei Implementierung des Verfahrens zur Impulsbreitenbegrenzung an einer digitalen Controllerschaltung lassen sich sowohl die obere als auch die untere Impulsbreitengrenze je nach Nachregelungsbedarf der Motorleistung auf betragsmäßig gleiche Werte einstellen.

Bei einer erfindungsgemäßen Einrichtung zur Impulsbreitenbegrenzung zur Unterdrückung von Regelschwingungen bei der Drehzahlregelung eines Elektrokleinstmotors, dessen Drehzahlregelung nach dem Regelprinzip der RI-Kompensation erfolgt, ist einer Impulsstufe eine die Impulsschwankungsbreite beeinflussende Stufe vorgeschaltet, welche die Impulsbreite des die Leistungsstufe des Elektrokleinstmotors beaufschlagenden Signals abhängig von der Leistungsnachregelung am Elektrokleinstmotor variiert. Die die Impulsbreitenbegrenzung erzeugende Schaltung kann sowohl in analoger Schaltungstechnik als auch als digitale Controllerschaltung realisiert sein. Letztere Ausprägung erlaubt zudem eine Berechnung der oberen und unteren Impulsbegrenzung derart, daß die die Schwankungsbreite eingrenzenden Schwellen betragsmäßig einander entsprechen, was die Regelungsqualität zusätzlich erhöht.

Anhand einer Zeichnung sei die Erfindung nachstehend im Detail erläutert.

Es zeigt:
- Fig. 1: Ein zahnärztliches Handstück, welches an einer Kupplungsstelle geteilt ist,
- Fig. 2: den gesamten Regelkreis zur Ansteuerung des Elektrokleinstmotors,
- Fig. 3: ein Blockschaltbild eines Regelkreises zur Impulsbreitenbegrenzung zur Vermeidung von Regelschwingungen .

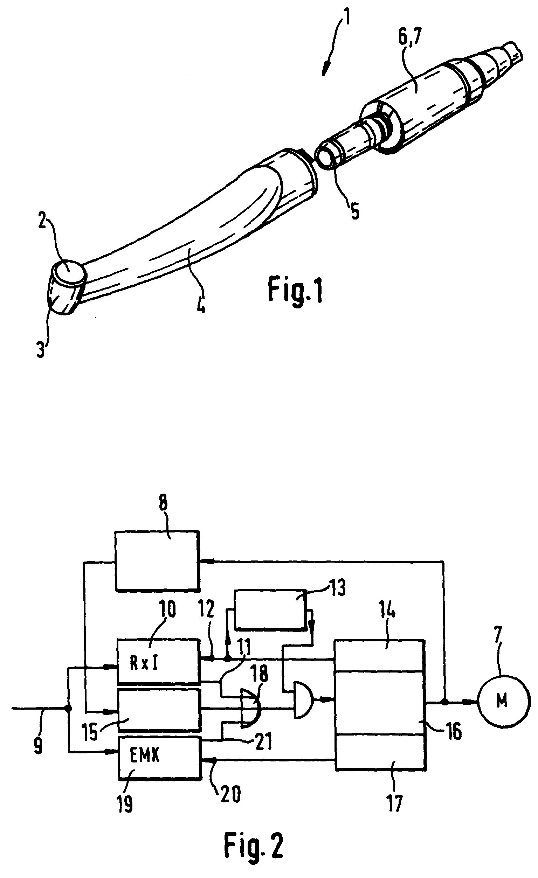

Fig. 1 zeigt ein zahnärztliches Handstück, welches an seiner Kupplungsstelle geteilt ist.

Das zahnärztliche Handstück 1 besteht aus einem oberen Teil, welches an einem Kopfteil 3 einen Werkzeugansatz 2 aufweist, in den das Werkzeug aufgenommen werden kann. Die Antriebswelle für das Werkzeug befindet sich einschließlich des Getriebes im Halsteil 4. Mittels des Druckknopfes 2 ist ein schneller Werkzeugwechsel am Werkzeugansatz möglich. Im unteren Teil des zahnärztlichen Handstückes 1 ist der Antrieb 6, beispielsweise ein Elektrokleinstmotor 7, aufgenommen, der über eine Kupplung 5 auf die im Haisstück 4 des oberen Teiles aufgenommene Antriebswelle des zahnärztlichen Werkzeuges einwirkt.

Fig. 2 zeigt einen Regelkreis in seinen wesentlichen Komponenten, mit welchem der in einem zahnärztlichen Handstück 1 aufgenommene Elektrokleinstmotor 7 in seinem Drehzahlbereich von 100 min⁻¹ bis 40000 min⁻¹ gesteuert wird.

Eine Sollvorgabe 9, beispielsweise eine vorgegebene Solldrehzahl an einem zahnärztlichen Werkzeug wird je einem RI-Regelbaustein 10 und einem EMK-Regelbaustein 19 zugeführt. Den beiden Regelkreisbausteinen 10, 19 werden darüber hinaus das an der Leistungsstufe 16 des Elektrokleinstmotors 7 ermittelte Signal 12 des aktuellen Motorstromes zugeführt. Ferner wird ein Signal 20, welches der aktuellen EMK des Elektrokleinstmotors 7 entspricht, an den entsprechenden Eingang des EMK-Regelbausteines 19 angelegt. Das Signal 12, dessen Wert dem aktuellen Motorstrom am Elektrokleinstmotor 7 entspricht, wird ausschließlich dem RI-Regelbaustein 10 zugeführt, wobei es ebenfalls als Eingangssignal einem Strombegrenzer 13 zugeführt werden kann, dessen Ausgangssignal einen weiteren Logikbaustein gemäß Fig. 2 beaufschlagt.

Der Elektrokleinstmotor 7 wird über die Leistungsstufe 16 durch ein die Spannung steuerndes Signal angesteuert, welches gleichzeitig einem Spannungsmesser 8 zugeführt wird, dessen Ausgangssignal als Eingangssignal für eine Spannungsregelung 15 dient. Das Ausgangssignal der Spannungsregelung 15 seinerseits wird über zwei Logikbausteine auf einen Eingang einer Leistungsstufe 13 gegeben, die den Elektrokleinstmotor 7 ansteuert. An der Leistungsstufe 16 für den Elektrokleinstmotor 7 befinden sich eine Messeinheit 14 zur Ermittlung des aktuellen Motorstromes am Elektrokleinstmotor, ferner eine Messeinheit zur Ermittlung einer Messeinheit 17 zur Ermittlung der elektromotorischen Kraft (EMK) am Elektrokleinstmotor 7.

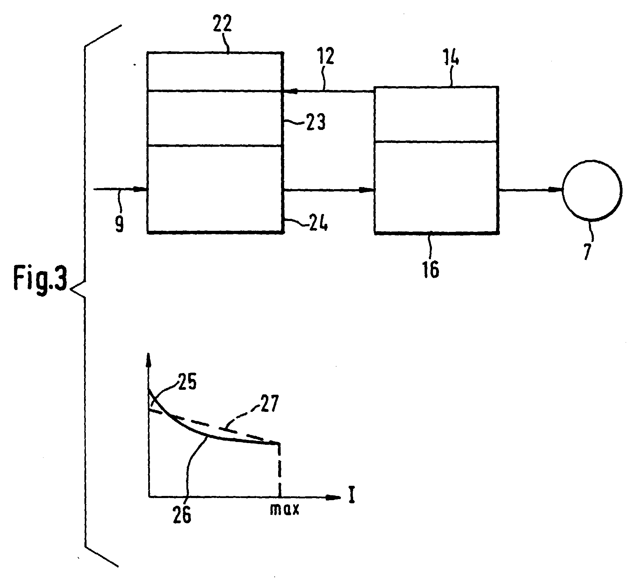

Fig. 3 schließlich zeigt ein Blockschaltbild eines Regelkreises zur Impulsbreitenbegrenzung zur Vermeidung von Regelschwingungen.

An der Leistungsstufe 16, über welche der als Antrieb 6 dienende Elektrokleinstmotor 7 eines im zahnärztlichen Handstück 1 aufgenommenen Werkzeuges erfolgt, ist eine Messeinheit 14 für den Motorstrom des Elektrokleinstmotors 7 enthalten. Eine dem Motorstrom-Istwert entsprechende Größe 12 wird einem Impulsbreitenmodulationsbaustein 22 zugeführt, welcher einer Impulse zur Ansteuerung der Leistungsstufe 16 erzeugenden Impulsstufe 24 vorgeschaltet ist.

Mittels der Eingangsgröße 12 des ImpulsmodulationsbauSteines 22 lässt sich die momentane Motorleistung am Elektrokleinstmotor 7 bestimmen und die minimale Impulslänge auf einen von dieser verschiedene untere Impulslänge anheben. Die Anhebung geschieht durch den Modulationsbaustein 22 abhängig von der Leistungsnachregelung am Elektrokleinstmotor 7, welche etwa durch eine Änderung der Sollvorgabe 9 hervorgerufen werden kann. Je weiter der Motorstrom I ansteigt, desto stärker nimmt die Impulsbreite in Richtung auf ein Dauerimpuls hin zu; dadurch steigt die Motorleistung an. Durch die Eingrenzung der Schwankungsbreite wird das Auftreten von Regelschwingungen bzw. Regelüberschwingungen mit den damit verbundenen negativen Begleiterscheinungen für den Anwender vermieden.

Mit der unteren Impulslänge, die oberhalb der minimalen Impulslänge liegt und die von dieser verschieden ist, ergibt sich ein Leistungseinsatz am Elektrokleinstmotor 7, der etwas unterhalb der augenblicklich benötigten Durchschnittsleistung des Elektrokleinstmotors 7 liegt. Je höher die benötigte Durchschnittsleistung liegt, also je stärker der Strom I ansteigt, umso mehr nähert sich die Impulslänge dem Dauerimpuls an, so daß eine Einschränkung der Impulsschwankungsbreite nach oben gegeben ist. Die in analoger Form ausgeführte Schaltung gemäß Fig. 3, mit der das erfindungsgemäße Verfahren durchführbar ist, lässt sich ebenfalls in digitaler Form auf einem Mikroprozessor realisieren, wobei dessen Konfiguration hier nicht dargestellt ist.

Die sich einstellende Regeldynamik wird mittels des erfindungsgemäßen Verfahrens zur Impulsbreitenbegrenzung derart variiert, daß mit zunehmender Nachregelung die Impulsschwankungsbreite in einem immer enger werdenden Rahmen liegt, wodurch die Regeldynamik bei steigendem Motorstrom im unteren Drehzahlbereich des Elektrokleinstmotors 7 zunehmend abnimmt und anstatt einer Regelschwingung 26 gemäß des Diagramms in Fig. 3 eine lineare Regelkennlinie 27 erzielbar ist. Mittels des erfindungsgemäß vorgeschlagenen Verfahrens und der Einrichtung zur Impulsbreitenbegrenzung für die Drehzahlregelung eines Elektrokleinstmotors 7, dessen Leistungsstufe 16 gemäß des RI-Regelprinzipes angesteuert wird, lässt sich die Drehzahl des Elektrokleinstmotors im niedrigen Drehzahlbereich stabil halten.

### Bezugszeichenliste

- 1: zahnärztliches Handstück
- 2: Druckknopf
- 3: Kopfteil
- 4: Halsteil
- 5: Kupplung
- 6: Antrieb
- 7: Elektrokleinstmotor
- 8: Spannungsmesser
- 9: Sollvorgabe
- 10: RI-Regelbaustein
- 11: RI-Ausgangssignal
- 12: Strom-Istwert-Eingang
- 13: Strombegrenzung
- 14: Strommesseinheit
- 15: Spannungsregelung
- 16: Leistungsstufe
- 17: EMK-Messeinheit
- 18: Logikbaustein
- 19: EMK-Regelbaustein
- 20: EMK-Eingangssignal
- 21: EMK-Ausgangssignal
- 22: Impulsbreitenmodulationsbaustein
- 23: Regeldynamik
- 24: Impulsgenerator
- 25: Überkompensation
- 26: Regelschwingung
- 27: lineare Regelkennlinie

## Patentansprüche

1. Verfahren zur Impulsbreitenbegrenzung zur Unterdrückung von Regelschwingungen, bei der Drehzahlregelung eines Elektrokleinstmotors (7) nach dem Regelungsprinzip der RI-Kompensation, **dadurch gekennzeichnet**, **daß** beim Nachregeln der Leistung des Elektrokleinstmotors (7) durch den RI-Regelbaustein (10), die minimal mögliche Impulsbreite abhängig von der Leistungsnachregelung variiert wird.

2. Verfahren gemäß Anspruch 1, **dadurch gekennzeichnet**, **daß** sich durch die Erhöhung der minimal möglichen Impulsbreite auf eine untere Impulslänge die einstellende Motorleistung am Elektrokleinstmotor etwa unterhalb der augenblicklich benötigten Motorleistung des Elektrokleinstmotors (7) einpendelt.

3. Verfahren gemäß Anspruch 1, **dadurch gekennzeichnet**, **daß** die Impulslänge ihre obere Begrenzung im Dauerimpuls findet.

4. Verfahren gemäß Anspruch 3, **dadurch gekennzeichnet**, **daß** bei steigender Durchschnittsleistung des Elektrokleinstmotors (7) sich die Länge des Impulses dem Dauerimpuls annähert.

5. Verfahren gemäß Anspruch 1, **dadurch gekennzeichnet**, **daß** die Impulsbegrenzung so berechnet wird, daß die obere und die untere Impulsbegrenzung im Betrag einander entsprechen.

6. Einrichtung zur Impulsbreitenbegrenzung zur Unterdrückung von Regelschwingungen bei der Drehzahlregelung eines Elektrokleinstmotors (7), dessen Drehzahl nach dem Regelungsprinzip der RI-Kompensation erfolgt, **dadurch gekennzeichnet**, **daß** einem Impulsgenerator (24) eine die Impulsschwankungsbreite beeinflussende Modulationsstufe (22) vorgeschaltet ist, welche die Impulsbreite abhängig von der Leistungsnachregelung des Elektrokleinstmotors (7) variiert.

7. Einrichtung zur Impulsbreitenbegrenzung nach Anspruch 6, **dadurch gekennzeichnet**, **daß** diese in analoger Schaltungstechnik realisiert ist.

8. Einrichtung zur Impulsbreitenbegrenzung nach Anspruch 6, **dadurch gekennzeichnet**, **daß** diese als digital betreibbarer Mikroprozessor ausgeführt ist.
